# EUROPÄISCHE PATENTSCHRIFT

(11) **EP 3 791 717 B1**
(45) Veröffentlichungstag und Bekanntmachung des Hinweises auf die Patenterteilung: **01.11.2023**
(21) Anmeldenummer: 20192335.6
(22) Anmeldetag: 24.08.2020
(51) Int. Cl.: A01M 7/00

(54) **LANDWIRTSCHAFTLICHE VERTEILMASCHINE, VORZUGSWEISE EINE FELDSPRITZE ODER EIN DÜNGERSTREUER**
AGRICULTURAL DISTRIBUTOR, PREFERABLY A FIELD SPRAYER OR A FERTILIZER SPREADER
MACHINE D'ÉPANDAGE AGRICOLE, DE PRÉFÉRENCE UN PULVÉRISATEUR OU DISTRIBUTEUR D'ENGRAIS

(30) Priorität: 28.08.2019 DE 102019123113
(43) Veröffentlichungstag der Anmeldung: 17.03.2021
(73) Patentinhaber: HORSCH LEEB Application Systems GmbH, 94405 Landau an der Isar (DE)
(72) Erfinder: LEEB, Theodor, 94405 Landau an der Isar (DE)
(74) Vertreter: v. Bezold & Partner Patentanwälte - PartG mbB

(56) Entgegenhaltungen:
- EP-A1- 3 075 246
- WO-A1-2015/067804
- DE-A1-102015 101 032

## Beschreibung

Die Erfindung betrifft eine landwirtschaftliche Verteilmaschine, vorzugsweise eine Feldspritze oder einen pneumatischen Düngerstreuer. Gattungsgemäße landwirtschaftliche Verteilmaschinen umfassen ein Trägerfahrzeug, ein Verteilergestänge zum Ausbringen von Material, wie Düngemittel, Pflanzenschutzmittel oder Saatgut, das zumindest um eine in Fahrtrichtung verlaufende Schwenkachse bewegbar am Trägerfahrzeug mittelbar oder unmittelbar angeordnet ist, eine Sensoreinrichtung zur Bestimmung einer Drehlage des Verteilergestänges, und eine Steuervorrichtung zur Steuerung und/oder Regelung einer Drehlage des Verteilergestänges um die Schwenkachse.

Um das Material großflächig auf dem zu bearbeitenden Feldboden auszubringen, weisen Verteilergestänge derartiger Feldspritzen oder pneumatischer Düngerstreuer seitliche Ausleger mit großer Arbeitsbreite auf, teilweise von mehr als zwanzig Metern, an denen Ausbringmittel, z. B. Sprühdüsen bei Feldspritzen, angeordnet sind. Für Transportfahrten werden solch breite Spritzgestänge gefaltet und eingeklappt.

Für eine effiziente Ausbringung, insbesondere zur möglichst gleichmäßigen Bedeckung des Bodens mit Material, soll der Abstand zwischen dem Verteilergestänge und Feldboden über die gesamte Arbeitsbreite möglichst konstant bleiben. Aus diesem Grund besteht bei zunehmenden Auslegerdimensionen und der damit einhergehenden Arbeitsbreite die Notwendigkeit, das Spritzgestänge in möglichst gleichbleibendem Abstand zum Boden zu führen, da bereits geringe Schrägstellungen des Spritzgestänges zu großen Abstandsdifferenzen der Ausbringmittel entlang des Verteilergestänges, z. B. der Sprühdüsen, zum Boden führen. Ungewollte Schwankungen des Verteilergestänges können ferner eine unerwünschte Abdrift des auszubringenden Materials verstärken.

Hierzu ist bekannt, ein Verteilergestänge um einen zentralen Punkt zumindest um eine Drehachse drehbar an einem Trägerfahrzeug aufzuhängen. Die Drehachse verläuft dabei vorzugsweise parallel zur Längsachse des Trägerfahrzeugs. Um eine gleichmäßige Ausbringung des Materials zu gewährleisten, muss der Abstand zwischen Oberkante des Bestandes und den Ausbringmitteln konstant auf einen definierten Abstand geregelt werden.

Aus dem Stand der Technik sind hierbei mehrere Ansätze bekannt, um das Verteilergestänge möglichst in der gewünschten Solldrehlage zu halten, Abweichungen von der Solldrehlage zu erfassen und bei Abweichungen das Verteilergestänge wieder mittels einer Stelleinrichtung in die Solldrehlage rückzuführen.

Es wird beispielhaft auf die EP 2 591 657 B1 verwiesen. Dort wird vorgeschlagen, eine Stelleinrichtung bereitzustellen, mittels derer die Drehlage des Verteilergestänges verändert werden kann, und die wahlweise in einem ersten Betriebsmodus oder einem zweiten Betriebsmodus betrieben werden kann. Hierbei wird in einem ersten Betriebsmodus eine weitgehend stellkraftfreie mechanische Verbindung herstellt, in dem das Ausbringgestänge weitestgehend von Drehmomenten um die Schwenkachse durch den Aufhängepunkt, resultierend aus Fahrzeugbewegungen um die Fahrzeuglängsachse, entkoppelt ist. Die stellkraftfreie Verbindung kann beispielsweise mittels annähernd in Echtzeit den Relativbewegungen zwischen dem Ausbringgestänge bzw. dessen Mittelteil und dem Trägerfahrzeug folgenden Stellbewegungen der Stelleinrichtung hergestellt und aufrechterhalten werden. In einem zweiten Betriebsmodus kann dann eine definierte Stellkraft und/oder ein definiertes Stellmoment in das Verteilergestänge zu dessen Verstellung eingeleitet werden.

Es wird ferner beispielhaft auf die EP 3 007 553 B1 verwiesen. Zur genauen Bestimmung der Drehlage des Verteilergestänges um die Schwenkachse wird vorgeschlagen, durch zeitliche Integration einer mit einem Drehratensensor erfassten Drehgeschwindigkeit eine Drehlage des Verteilergestänges zu berechnen, und die berechnete Drehlage mit einer direkt gemessenen Drehlage eines Drehwinkelsensors zur Bestimmung einer momentanen Drehlage des Gestänges zu fusionieren. Weiterer relevanter Stand der Technik sind: WO 2015/067804 A1, DE 10 2015 101032 A1, EP 3 075 246 A1.

Es ist eine Aufgabe der Erfindung, einen verbesserten Ansatz zur Steuerung und/oder Regelung einer Drehlage eines Verteilergestänges einer landwirtschaftlichen Verteilmaschine bereitzustellen, mit dem Nachteile herkömmlicher Techniken vermieden werden können. Die Aufgabe der Erfindung ist es insbesondere, eine besonders präzise und gleichzeitig kosteneffiziente Technik zur Steuerung und/oder Regelung einer Drehlage eines Verteilergestänges einer landwirtschaftlichen Verteilmaschine bereitzustellen.

Diese Aufgaben werden durch eine landwirtschaftliche Verteilmaschine mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem allgemeinen Gesichtspunkt betrifft die vorliegende Offenbarung eine landwirtschaftliche Verteilmaschine, nachfolgend auch kurz als Verteilmaschine bezeichnet. Diese umfasst ein Trägerfahrzeug und ein Verteilergestänge zum Ausbringen von Material, wie Düngemittel, Pflanzenschutzmittel oder Saatgut, das zumindest um eine in Fahrtrichtung verlaufende Schwenkachse bewegbar am Trägerfahrzeug mittelbar oder unmittelbar angeordnet ist. Das Verteilergestänge weist eine hohe Arbeitsbreite auf, d. h. eine Arbeitsbreite, die wesentlich größer als eine Breite des Trägerfahrzeugs, z. B. ein Vielfaches der Breite des Trägerfahrzeugs, ist. Die Arbeitsbreite des Verteilergestänges, d. h. die Breite in Arbeitsposition bzw. im vollständig ausgeklappten Zustand, kann mindestens 18 Meter sein. Die Verteilmaschine umfasst ferner eine Sensoreinrichtung zur Bestimmung einer Drehlage des Verteilergestänges. Die Sensoreinrichtung umfasst ferner mindestens einen am Verteilergestänge angeordneten Sensor zur Erfassung einer Drehlage oder einer Drehgeschwindigkeit des Verteilergestänges.

Die Verteilmaschine umfasst ferner eine Steuervorrichtung zur Steuerung und/oder Regelung einer Drehlage des Verteilergestänges um die Schwenkachse. Die Steuervorrichtung umfasst eine druckmittelbetätigte Stelleinrichtung mit zwei im Wesentlichen entgegengesetzt wirkenden Wirkbereichen, mittels der eine Stellkraft erzeugbar ist, um das Verteilergestänge um die Schwenkachse zu bewegen. Hierbei ist jedem Wirkbereich ein Druckmittelregelventil zugeordnet zur Steuerung eines an dem jeweiligen Wirkbereich anliegenden Drucks oder Volumenstroms. Die druckmittelbetätigte Stelleinrichtung umfasst mindestens einen druckmittelbetätigten Aktuator.

Mit "Wirkbereich" der Stelleinrichtung bzw. des Aktuators ist ein Bereich der Stelleinrichtung bzw. des Aktuators bezeichnet, in welchem die Druckkraft von Druckmittel in eine Bewegung eines Stellorgans der Stelleinrichtung bzw. des Aktuators umgesetzt wird oder umsetzbar ist. Unter "zwei im Wesentlichen entgegengesetzt wirkenden" Wirkbereichen soll verstanden werden, dass eine Druckkraft von Druckmittel in dem einen Wirkbereich eine Verstellkraft auf das Verteilergestänge in der einen Richtung um die Schwenkachse erzeugt und eine Druckkraft von Druckmittel in dem anderen Wirkbereich eine Verstellkraft auf das Verteilergestänge in der entgegengesetzten Richtung um die Schwenkachse erzeugt. Anders ausgedrückt wird für jede Richtung zum Verschwenken des Verteilgestänges (im Uhrzeigersinn oder im Gegenuhrzeigersinn) ein Druckmittelregelventil verwendet.

Die Sensoreinrichtung kann ausgebildet sein, die Drehlage des Verteilergestänges zu bestimmen. Alternativ oder zusätzlich kann auch die Steuervorrichtung ausgebildet sein, die Drehlage des Verteilergestänges anhand der Messwerte der Sensoreinrichtung zu bestimmen.

Die Steuervorrichtung umfasst ferner eine Steuereinrichtung , die ausgebildet ist, in Abhängigkeit von der bestimmten Drehlage des Verteilergestänges eine Sollwertvorgabe eines an den Wirkbereichen wirkenden Drucks oder einer an den Wirkbereichen wirkenden Stellkraft (Druckkraft) des Druckmittels zu bestimmen und die Druckmittelregelventile jeweils elektrisch gesteuert auf die Sollwertvorgabe einzustellen.

Die Ausführung der landwirtschaftlichen Verteilmaschine beruht auf der Erkenntnis, dass die Druckmittelregelventile in Kombination mit dem mindestens einen am Verteilergestänge angeordneten Sensor der Sensoreinrichtung eine besonders präzise und schnelle Steuerung der an den Wirkbereichen wirkenden Kräfte zur Entgegenwirkung einer (unerwünscht) auftretenden Neigung oder zur bewussten Verstellung des Verteilergestänges ermöglichen. Anhand des mindestens einen am Verteilergestänge angeordneten Sensors der Sensoreinrichtung kann eine genaue Sollwertvorgabe des an den Wirkbereichen wirkenden Drucks oder der an den Wirkbereichen wirkenden Stellkraft des Druckmittels zur elektrischen Ansteuerung der Druckmittelregelventile bestimmt werden. Hieraus ergibt sich die Möglichkeit, eine Technik zur Drehlagensteuerung und/oder -regelung des Verteilergestänges bereitzustellen, bei welcher optional keine Drucksensoren, Kraftsensoren und/oder dergl. vonnöten sind, die mit der druckmittelbetätigten Stelleinrichtung gekoppelt sind.

Die Steuereinrichtung ist ausgebildet, die Druckmittelregelventile jeweils anhand einer vorbestimmten Kennlinie der Druckmittelregelventile elektrisch gesteuert auf die Sollwertvorgabe einzustellen. Die Kennlinie der Druckmittelregelventile legt einen Zusammenhang zwischen Sollwertvorgabe und elektrischem Ansteuerungssignal, z. B. der Bestromung, der Druckmittelregelventile fest. Dies hat den Vorteil, dass über die Kennlinie der Druckmittelregelventile der Druck auf das Verteilergestänge präzise an die Sollwertvorgabe angepasst werden kann.

Die Druckmittelregelventile arbeiten daraufhin so, dass die gewünschte Sollwertvorgabe am jeweiligen Wirkbereich eingestellt wird, z. B. dort der gewünschte Druck oder Volumenstrom auftrifft. Die Kennlinie kann in der Steuereinrichtung oder einem Datenspeicher der landwirtschaftlichen Maschine hinterlegt sein. Es kann eine Kennlinie hinterlegt sein, die für beide Druckmittelregelventile gilt, falls diese z. B. baugleich ausgeführt sind. Es kann auch für jedes Druckmittelregelventil eine eigene Kennlinie hinterlegt sein. Gibt beispielsweise die aus der Drehlage bestimmte Sollwertvorgabe vor, welcher Druck oder Volumenstrom des Druckmittels an den Wirkbereichen erforderlich ist, kann anhand der Kennlinie das elektrische Ansteuerungssignal der Druckmittelregelventile, z. B. deren Bestromung, ermittelt und zur aktiven Steuerung und/oder Regelung der Drehlage des Verteilgestänge verwendet werden. Soll lediglich beispielhaft ein definierter Differenzdruck oder eine definierte Differenzkraft an den Wirkbereichen vorliegen, werden die insbesondere gegensinnig arbeitenden Druckmittelregelventile jeweils auf Basis der in der Steuerungseinrichtung hinterlegten Kennlinie(n) entsprechend elektrisch angesteuert und somit ein definierter Differenzdruck bzw. eine definierte Differenzkraft erzeugt.

Vorstehend wurde bereits festgestellt, dass anhand des mindestens einen am Verteilergestänge angeordneten Sensors der Sensoreinrichtung eine genaue Sollwertvorgabe des an den Wirkbereichen wirkenden Drucks oder der an den Wirkbereichen wirkenden Stellkraft des Druckmittels zur elektrischen Ansteuerung der Druckmittelregelventile bestimmt werden kann und sich hieraus die Möglichkeit ergibt, eine Technik zur Drehlagensteuerung und/oder -regelung des Verteilergestänges bereitzustellen, bei welcher optional keine Drucksensoren, Kraftsensoren und/oder dergl. vonnöten sind, die mit der druckmittelbetätigten Stelleinrichtung gekoppelt sind.

Entsprechend sieht eine Ausführungsform vor, dass kein Druckmittelsensor, insbesondere kein Drucksensor und/oder kein Differenzdrucksensor, im Druckmittelkreis außerhalb der Druckmittelregelventile, insbesondere den Druckmittelleitungsstrecken der druckmittelbetätigten Stelleinrichtung angeordnet ist und/oder zur Ansteuerung der Druckmittelregelventile verwendet wird. Selbstverständlich können die Druckmittelregelventile, z. B. Druckregelventile, eine integrierte Drucksensorik, d. h. eine innerhalb der Druckregelventile angeordnete Drucksensorik, aufweisen, um den Druck zu regeln. Alternativ oder zusätzlich kann eine Ausführungsform vorsehen, dass die druckmittelbetätigte Stelleinrichtung keinen Sensor aufweist, der eine Auslenkung eines Stellorgans der Stelleinrichtung oder ein auf das Stellorgan wirkende Kraft erfasst, wobei die Stelleinrichtung vorzugsweise hierzu keinen Wegsensor, keinen Dehnungssensor und keinen Kraftsensor aufweist.

Ein besonderer Vorzug dieser Ausführungsformen ist daher, dass ein besonders kosteneffizienter Aufbau ermöglicht wird, da zur Regelung oder Steuerung der Drehlage des Verteilergestänges nur die ohnehin notwendige Drehlagensensorik verwendet wird, zusätzlich zu den Druckmittelregelventilen jedoch keine weitere Drucksensorik oder Kraftsensoren erforderlich sind, die mit der Stelleinrichtung gekoppelt oder in diese integriert sind.

Die Steuereinrichtung ist ausgebildet, die Sollwertvorgabe ohne einen sensorisch erfassten Druckwert oder Volumenstromwert des Druckmittels zu bestimmen, und/oder einen Steuerstrom zur Ansteuerung der Druckmittelregelventile ausschließlich anhand der Kennlinie und der Drehlage der Sensoreinrichtung oder einer hieraus berechneten Größe zu bestimmen. Dies bietet den Vorteil, dass eine besonders effiziente Steuerung und/oder Regelung der Drehlage des Verteilergestänges ermöglicht wird.

Gemäß einer weiteren Ausführungsform ist die Steuereinrichtung ausgebildet, falls die bestimmte Drehlage einer Solldrehlage des Verteilergestänges entspricht und/oder nicht mehr als um einen Schwellenwert von der Solldrehlage abweicht, ein der Sollwertvorgabe zugeordnetes elektrisches Ansteuerungssignal der Druckmittelregelventile konstant zu halten. Ferner kann hierbei vorgesehen sein, dass keine Stellkräfte in das Verteilergestänge eingeleitet werden. Dies kann vorzugsweise derart erfolgen, dass beispielsweise durch Wankbewegungen des Trägerfahrzeugs oder durch Gestängebewegungen verursachte Druckspitzen oder Kräfteschwankungen an den Wirkbereichen durch die Druckmittelregelventile selbstständig ausgeregelt werden und/oder indem der auf Basis der Sollwertvorgabe vorgegebene Druck oder die entsprechend vorgegebene Kraft konstant gehalten wird.

Unter "keine Stellkräfte in das Verteilergestänge einzuleiten" soll in diesem Zusammenhang verstanden werden, dass keine Verstellkräfte zur Veränderung der Drehlage des Verteilergestänges eingeleitet werden. Vielmehr stellt das konstante Ansteuerungssignal der Druckmittelregelventile sicher, dass in das Verteilergestänge eingeleitete Störmomente, z. B. resultierend aus Wankbewegungen des Trägerfahrzeugs, sofort ausgeglichen, z. B. ausgeregelt werden, so dass diese erst gar nicht zu einer unerwünschten Veränderung der Drehlage und unerwünschten Verstellung des Verteilergestänges führen.

Entsprechend kann die Steuereinrichtung ausgebildet sein, falls die bestimmte Drehlage einer Solldrehlage des Verteilergestänges entspricht und/oder nicht mehr als um einen Schwellenwert von der Solldrehlage abweicht, einen Betriebsmodus durchzuführen, in dem das Verteilergestänge weitestgehend von Drehmomenten um die Schwenkachse resultierend aus Fahrzeugbewegungen um die Fahrzeuglängsachse entkoppelt ist, wobei ein der Sollwertvorgabe entsprechendes elektrisches Ansteuerungssignal der Druckmittelregelventile konstant gehalten wird. Dieser Betriebsmodus wird nachfolgend auch als erster Betriebsmodus bezeichnet, zur besseren Unterscheidung von einem weiteren zweiten Betriebsmodus.

In einer weiteren Ausführungsform ist die Steuereinrichtung ausgebildet, bei einer Abweichung der bestimmten Drehlage von einer Solldrehlage des Verteilergestänges oder falls die bestimmte Drehlage um mehr als einen Schwellenwert von der Solldrehlage abweicht, für jeden der Wirkbereiche die nachfolgenden Sollwertvorgaben zu bestimmen: eine Sollwertvorgabe, nachfolgend als erste Sollwertvorgabe bezeichnet, die eine Bewegung des Verteilergestänges hin zur Solldrehlage bewirkt; eine weitere Sollwertvorgabe, nachfolgend als dritte Sollwertvorgabe bezeichnet, die ein Halten des Verteilergestänges in der Solldrehlage bewirkt, und mindestens eine weitere Sollwertvorgabe, nachfolgend als zweite Sollwertvorgabe bezeichnet, deren Wert zwischen der ersten und der dritten Sollwertvorgabe liegt. Gemäß dieser weiteren Ausführungsform ist die Steuereinrichtung ausgebildet, die Druckmittelregelventile jeweils elektrisch gesteuert zuerst auf die erste Sollwertvorgabe, dann vor Erreichen der Solldrehlage auf die mindestens eine zweite Sollwertvorgabe und bei Erreichung der Sollwertvorgabe auf die dritte Sollwertvorgabe einzustellen.

Dies bietet den Vorteil, dass bei einer Verstellung des Verteilergestänges hin in die gewünschte Solldrehlage das Verteilergestänge vor Erreichen der Solldrehlage aktiv abgebremst bzw. gedämpft wird, so dass eine schnelle Einstellung der Solldrehlage, möglichst ohne oder mit wenig Überschwingen ermöglicht wird, wobei hierzu vorteilhafterweise die Druckmittelventile lediglich auf die erste, zweite und dritte Sollwertvorgabe elektrisch angesteuert eingestellt werden müssen. Die Solldrehlage kann beispielsweise mittels am Verteilergestänge angeordneten Abstandssensoren, die den Abstand des Verteilergestänges zum Boden oder Pflanzenbestand messen, bestimmt werden. Die Abstandssensoren können als Ultraschallsensoren ausgeführt sein.

Um eine steuerungs- oder regelungstechnisch besonders vorteilhafte Ansteuerung der Druckmittelregelventile zu realisieren, kann hierbei optional ferner vorgesehen sein, dass die Einstellung der Druckmittelregelventile auf die erste, zweite und dritte Sollwertvorgabe anhand der vorbestimmten Kennlinie, wie vorstehend erwähnt, erfolgt. Vorzugsweise kann diese Ansteuerung der Druckmittelregelventile hierbei ausschließlich anhand der vorbestimmten Kennlinie erfolgen. Dies bedeutet, dass anhand der Kennlinie die elektrischen Ansteuerungswerte, z. B. die Bestromungswerte, für die Druckmittelventile ermittelt werden, die jeweils der ersten Sollwertvorgabe, der mindestens einen zweiten Sollwertvorgabe und der dritten Sollwertvorgabe entsprechen, und die Druckmittelregelventile dann entsprechend nur auf Basis dieser Ansteuerungswerte angesteuert werden.

Gemäß einer Variante dieser Ausführungsform ist vorgesehen, dass mehrere zweite Sollwertvorgaben für jeden Wirkbereich bestimmt werden, vorzugsweise derart, dass die dritte Sollwertvorgabe ausgehend von der ersten Sollwertvorgabe mittels der zweiten Sollwertvorgaben treppenartig ansteigend oder absteigend eingestellt wird. Hierdurch kann das Einstellen der Solldrehlage besonders präzise erfolgen und Überschwingungen besonders zuverlässig vermieden werden.

An Stellen einer treppenartigen bzw. gestuften Einstellung des Übergangs von der dritten Sollwertvorgabe ausgehend von der ersten Sollwertvorgabe kann auch eine Vielzahl zweiter Sollwertvorgaben bestimmt werden, so dass ein kontinuierlicher, oder nahezu kontinuierlicher, Übergang realisiert wird. In der Praxis hat sich jedoch im Rahmen der Erfindung gezeigt, dass aufgrund der vergleichsweise großen Trägheit des Verteilergestänges einige wenige zweite Sollwertvorgaben ausreichend sind.

Alternativ oder zusätzlich kann die Steuereinrichtung ausgebildet sein, die mindestens eine zweite Sollwertvorgabe, vorzugsweise deren Anzahl und/oder Abweichung von der ersten und dritten Sollwertvorgabe, in Abhängigkeit von der Abweichung der bestimmten Drehlage von der Solldrehlage des Verteilergestänges festzulegen. Hierdurch kann die Einstellung der gewünschten Solldrehlage weiter verbessert werden.

Gemäß einer besonders vorteilhaften Ausführungsform sind die Druckmittelregelventile als Druckregelventile ausgeführt, beispielsweise als elektromagnetisch angesteuerte Proportional-Druckregelventile. Alternativ zu einer Druckregelung an den Wirkbereichen kann auch eine Volumenstromregelung realisiert sein. Gemäß dieser Variante können die Druckmittelregelventile als Volumenstrom-Regelventile ausgeführt sein, beispielsweise als elektromagnetisch angesteuerte Volumenstrom-Regelventile.

In einer Ausführungsform kann die Stelleinrichtung zur Ausbildung der zwei im Wesentlichen entgegengesetzt wirkenden Wirkbereiche einen doppeltwirkenden fluidischen Druckmittelzylinder aufweisen. Alternativ hierzu kann die Stelleinrichtung zur Ausbildung der zwei im Wesentlichen entgegengesetzt wirkenden Wirkbereiche zwei gegensinnig arbeitende, einfachwirkende, fluidische Druckmittelzylinder aufweisen. In einer besonders vorteilhaften Variante können die zwei gegensinnig arbeitenden einfachwirkenden fluidischen Druckmittelzylinder jeweils als Plungerzylinder ausgeführt sein.

Die vorgenannten fluidischen Druckmittelzylinder können als hydraulisch arbeitende oder pneumatisch arbeitende Druckmittelzylinder ausgeführt sein.

In einer weiteren Ausführungsform umfasst die Sensoreinrichtung zur Bestimmung einer Drehlage des Verteilergestänges einen am Verteilergestänge angeordneten Drehratensensor. Durch zeitliche Integration der gemessenen Drehgeschwindigkeit des Verteilergestänges kann hieraus die Drehlage bestimmt werden. Der Drehratensensor kann als Gyroskop ausgeführt sein. Dies ermöglicht eine besonders präzise Messung der Drehgeschwindigkeit. Der Drehratensensor kann an einem Mittelteil des Verteilergestänges angeordnet sein.

In einer weiteren Ausführungsform kann die Sensoreinrichtung zur Bestimmung einer Drehlage des Verteilergestänges alternativ oder zusätzlich einen Drehwinkelsensor zur Erfassung einer Relativdrehung zwischen Trägerfahrzeug und Gestänge oder einer Drehlage des Gestänges zum Boden aufweisen. Der Drehwinkelsensor kann zwischen Trägerfahrzeug und Verteilergestänge angeordnet sein.

In einer besonders vorteilhaften Variante umfasst die Sensoreinrichtung zur Bestimmung einer Drehlage des Verteilergestänges sowohl einen am Verteilergestänge angeordneten Drehratensensor als auch einen Drehwinkelsensor zur Erfassung einer Relativdrehung zwischen Trägerfahrzeug und Gestänge oder einer Drehlage des Gestänges zum Boden. Gemäß dieser Variante ist die Steuereinrichtung ausgebildet zur Bestimmung der Drehlage des Verteilergestänges um die Schwenkachse durch zeitliche Integration einer mit dem Drehratensensor erfassten Drehgeschwindigkeit eine Drehlage des Verteilergestänges zu berechnen, und diese berechnete Drehlage mit der erfassten Drehlage des Drehwinkelsensors zur Bestimmung einer momentanen Drehlage des Gestänges zu fusionieren. Dies ermöglichst eine besonders genaue Bestimmung der Drehlage des Verteilergestänges, da dadurch Vorteile der einzelnen Messmethoden genutzt und deren Nachteile kompensiert werden können.

So beeinflussen bei der zeitlichen Integration der Drehgeschwindigkeit zur Berechnung der Drehlage weder das Trägerfahrzeug noch translatorische Beschleunigungen die Berechnung der Drehlage in störender Weise. Jedoch werden andererseits Messfehler ebenfalls integriert und können zum Problem der "Winkeldrift" führen. Eine Messung der Drehlage in Bezug auf die Referenzebene, beispielsweise durch eine Messung der Relativdrehung zwischen Trägerfahrzeug und Gestänge oder eine Messung eines Neigungswinkels zur Erdbeschleunigung, weist dagegen den Nachteil des Einflusses von Störungen durch Drehbewegungen des Trägerfahrzeuges oder durch translatorische Beschleunigungen, wie sie etwa bei Kurvenfahrt auftreten, auf, dem jedoch der Vorteil gegenübersteht, dass diese Art der Erfassung der Drehlage keinem Winkeldrift unterliegt. Für eine beispielhafte Ausführung einer derartigen Fusion der berechneten Drehlage mit der gemessenen Drehlage wird auf die EP 3 007 553 B1 verweisen.

Im Rahmen der vorliegenden Erfindung wurde festgestellt, dass eine derartige Bestimmung der Drehlage des Verteilergestänges durch Fusion der berechneten Drehlage mit der gemessenen Drehlage besonders vorteilhaft in Kombination mit der Verwendung von Druckmittelregelventilen ist. Dies ist insbesondere dann der Fall, wenn die Sollwertvorgabe für den an den Wirkbereichen wirkenden Druck oder der an den Wirkbereichen wirkenden Stellkraft des Druckmittels nur auf Basis der von der Sensorvorrichtung bestimmten Drehlage und deren Abweichung von der Solldrehlage bestimmt werden soll und diese Sollwertvorgabe dann nur anhand der Kennlinie der Druckmittelventile eingestellt wird, also kein zusätzlicher Druckmittelsensor oder Kraftsensor in der Stelleinrichtung vorgesehen ist.

Gemäß einer Ausführungsform ist die Stelleinrichtung ausgebildet, das Verteilergestänge wahlweise in beide Drehrichtungen um die in Fahrtrichtung verlaufende Schwenkachse mit einer Winkelgeschwindigkeit von mindestens 0,1 rad/s, weiter vorzugsweise mindestens 0,2 rad/s zu bewegen. Hierzu ist die Stelleinrichtung entsprechend auszulegen, z. B. indem eine Verfahrgeschwindigkeit des am Gestänge angreifenden Stellorgans der Stelleinrichtung, z. B. eines Hydraulik- oder Pneumatikzylinders, unter Berücksichtigung des wirkenden Hebelarms des Stellorgans entsprechend groß gewählt wird.

Vorstehend wurde bereits erwähnt, dass die Druckmittelregelventile in Kombination mit dem mindestens einen am Verteilergestänge angeordneten Sensor der Sensoreinrichtung eine besonders präzise und schnelle Steuerung der an den Wirkbereichen wirkenden Kräfte zur Entgegenwirkung einer auftretenden Neigung oder zur bewussten Verstellung des Verteilergestänges ermöglichen. Ferner ist es insbesondere für den vorstehend beschriebenen ersten Betriebsmodus von großem Vorteil, etwaige in das Verteilergestänge eingeleitete Störmomente oder Druckspitzen an den Wirkbereichen schnell auszuregeln, bevor diese zu einer unerwünschten Veränderung der Drehlage des Verteilergestänges führen. Dies kann mit einer solchen Stelleinrichtung, mit der Winkelgeschwindigkeiten von mindestens 0,1 rad/s, weiter vorzugsweise mindestens 0,2 rad/s des Verteilergestänges um die Schwenkachse erzielt werden, zuverlässig realisiert werden.

Ferner kann an jedem Wirkbereich der Stelleinrichtung je eine Druckmittelleitungsstrecke angeschlossen sein, durch welche den Wirkbereichen das Druckmittel zuführbar und aus diesen abführbar ist. Hierbei ist in jeder Druckmittelleitungstrecke eines der Druckmittelregelventile zur Steuerung eines an dem jeweiligen Wirkbereich anliegenden Drucks oder Volumenstroms angeordnet. Ferner kann vorgesehen sein, dass den Druckmittelregelventilen jeweils kein Sperrventil zugeordnet ist, d. h. in einer das Druckmittelventil aufweisenden Druckmittelleitungsstrecke ist gemäß dieser Variante nicht noch ein Sperrventil angeordnet.

Die landwirtschaftliche Verteilmaschine kann eine Feldspritze sein. Gemäß dieser Ausführungsform ist das Verteilgestänge ein Spritzgestänge mit beidseits des Trägerfahrzeugs abstehenden Auslegern sowie an diesem angeordneten, mit einem Speicher für mindestens einen flüssigen und/oder festen Wirkstoff verbundenen und/oder verbindbaren, Ausbringungsmitteln, wie beispielsweise mit einem Spritzmitteltank verbundene und/oder verbindbare Spritzdüsen.

Die landwirtschaftliche Maschine kann ein pneumatischer Düngerstreuer sein zum Verteilen von körnigen Düngemitteln, mit einem Vorratsbehälter für das zu verteilende Düngemittel, einem damit in Verbindung stehenden Dosierorgan und einem Verteiler, der mit dem Dosierorgan über eine pneumatische Förderleitung verbunden ist und mehrere in Abständen zueinander angeordnete Ausbringvorrichtungen aufweist, die entlang des Verteilergestänges angeordnet sind.

Die landwirtschaftliche Verteilmaschine kann als eine selbstfahrende oder als eine mittels eines Zugfahrzeugs koppelbare bzw. gezogene oder als an einem Zugfahrzeug anbaubare und/oder angebaute landwirtschaftliche Verteilmaschine ausgebildet sein. Die selbstfahrende Verteilmaschine kann zudem eine autonom fahrende Landmaschine sein, beispielsweise eine vollautonom oder teilautonom fahrende Landmaschine.

Das Verteilergestänge, das zumindest um eine in Fahrtrichtung verlaufende Schwenkachse bewegbar am Trägerfahrzeug mittelbar oder unmittelbar angeordnet ist, kann an einem Träger gehaltert sein, der wiederum beispielsweise mit einem Aufbau- oder Rahmenabschnitt oder einer Rahmenkonstruktion des Trägerfahrzeugs und/oder mit einem starr oder beweglich gelagerten Stützabschnitt des Trägerfahrzeugs gekoppelt ist. Ferner kann der Träger höhenverstellbar an dem Aufbau- oder Rahmenabschnitt oder einer Rahmenkonstruktion des Trägerfahrzeugs angebracht sein, wobei die Höhenverstellung insbesondere mittels eines zwischen der Rahmenkonstruktion und dem Träger angebrachten Viergelenks, z. B. in Form eines Parallelogramms, erfolgen kann. Auch kann die Höhenverstellung mittels eines zwischen der Rahmenkonstruktion und dem Träger angebrachten Linearschlittens erfolgen. Zur Höhenverstellung kann dem Parallelogramm oder dem Linearschlitten z. B. ein Linearantrieb in Form eines Hydraulik- oder Pneumatikzylinders zugeordnet sein, so dass der Höhenabstand zwischen dem Verteilgestänge und einer Bodenoberfläche bzw. einem Pflanzenbestand variabel veränderbar ist.

Die Schwenkachse kann ferner beispielsweise durch ein Kugelgelenk ausgebildet sein. Das Kugelgelenk ermöglicht nicht nur eine Verschwenkung um die Schwenkachse, sondern ferner um eine weitere Achse.

Das Verteilgestänge kann ein Mittelteil und um aufrechte Achsen schwenkbar zum Mittelteil angeordnete seitliche Ausleger aufweisen, wobei die Ausleger sich aus zwei oder mehr, wiederum um aufrechte Achsen schwenkbar zueinander angeordnete, Segmente zusammensetzen können. Ferner besteht die Möglichkeit, dass die Ausleger und vorzugsweise auch deren Segmente in einer senkrecht zur Vorwärtsfahrtrichtung der Verteilmaschine angeordneten Ebene relativ zum Mittelteil verschwenkbar sind zur besseren Anpassung an ein Bodenprofil.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht einer landwirtschaftlichen Verteilmaschine gemäß einer Ausführungsform der Erfindung;
- Figur 2: einen Detailausschnitt auf ein Verteilergestänge an einem Rahmen mit einer druckmittelbetätigten Stelleinrichtung gemäß einer Ausführungsform der Erfindung;
- Figur 3: eine schematische Ansicht einer Steuervorrichtung der landwirtschaftlichen Verteilmaschine gemäß einem Ausführungsbeispiel;
- Figur 4: eine Kennlinie zur Ansteuerung der Druckregelventile gemäß einem Ausführungsbeispiel;
- Figur 5: ein schematisches Blockdiagramm zur Illustration der Steuerung oder Regelung der Drehlage des Verteilergestänges gemäß einem Ausführungsbeispiel;
- Figur 6: ein schematisches Blockdiagramm zur Illustration eines zweiten Betriebsmodus gemäß einem Ausführungsbeispiel; und
- Figur 7: ein beispielhafter zeitlicher Verlauf der Sollwertvorgabe im zweiten Betriebsmodus gemäß einem Ausführungsbeispiel.

Gleiche oder funktional äquivalente Elemente sind in allen Figuren mit denselben Bezugszeichen bezeichnet und zum Teil nicht gesondert beschrieben.

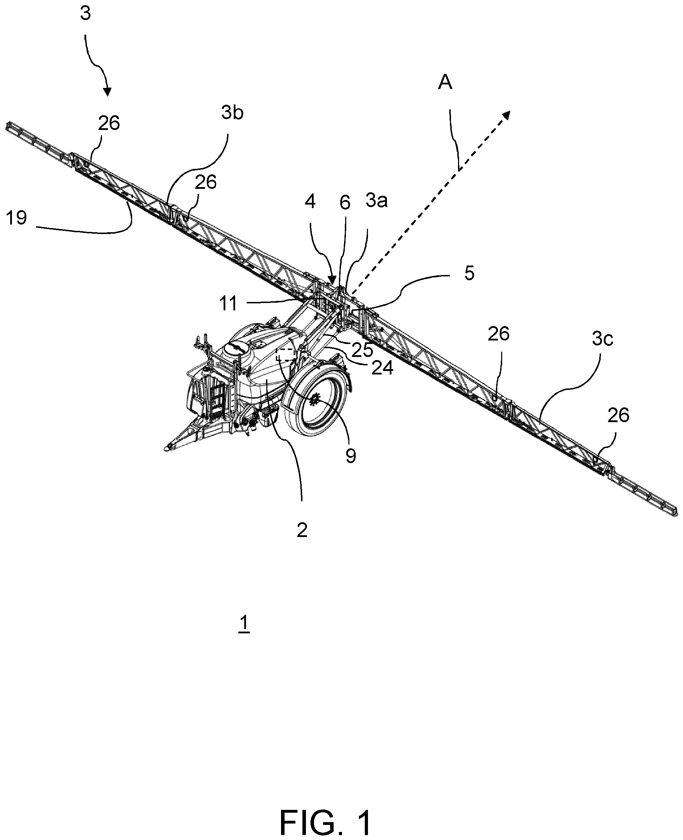

Figur 1 zeigt eine perspektivische Ansicht einer landwirtschaftlichen Verteilmaschine 1 gemäß einer Ausführungsform der Erfindung: Die landwirtschaftliche Verteilmaschine ist beispielhaft als gezogene Feldspritze ausgeführt. Die Verteilmaschine 1 umfasst ein Trägerfahrzeug 2 und ein Verteilergestänge 3 zum Ausbringen von Düngemittel oder Pflanzenschutzmittel. Das Verteilergestänge 3 ist zumindest um eine in Fahrtrichtung verlaufende Schwenkachse A, illustriert mit der gestrichelten Linie, bewegbar am Trägerfahrzeug 2 angeordnet. Das Verteilergestänge 3, bei einer Feldspritze als Spritzgestänge bezeichnet, umfasst ein Mittelteil 3a und zwei beidseits des Trägerfahrzeugs 2 abstehende Ausleger 3b, 3c. Entlang des Spritzgestänges sind verteilt und beabstandet Sprühdüsen bzw. Düsenstücke 19 angeordnet, die über Leitungen mit einem im Trägerfahrzeug 2 angeordneten Spritzmitteltank fluidisch verbunden sind. An jedem Ausleger 3b, 3c sind ferner jeweils zwei Abstandssensoren in Form von Ultraschallsensoren 26 angeordnet, die den Abstand des Gestänges zum Boden bzw. zum Pflanzenbestand messen.

Die Verteilmaschine 1 umfasst ferner eine Sensoreinrichtung 4 zur Bestimmung einer Drehlage des Verteilergestänges 3. Die Sensoreinrichtung 4 umfasst in der gezeigten Ausführungsform einen am Verteilergestänge, konkret im Bereich des Mittelteils 3a des Verteilergestänges 3, angeordneten Drehratensensor 5 in Form eines Gyroskops. Die Sensoreinrichtung 4 umfasst ferner einen Drehwinkelsensor 6 zur Erfassung einer Relativdrehung zwischen Trägerfahrzeug 2 und Verteilergestänge 3, der zwischen Trägerfahrzeug 2 und Verteilergestänge 3 angeordnet ist.

Das Verteilergestänge 3 ist am Trägerfahrzeug 2 über einen rahmenartigen Träger 11 befestigt. Hierbei ist das Verteilergestänge an einer Aufhängung 11a des Trägers 11 aufgehängt und hierüber am Träger 11 verschwenkbar befestigt. Der Träger 11 ist mittels eines Parallelogrammgestänges 24 höhenverstellbar zum Trägerfahrzeug 2 bzw. höhenverstellbar zu einer Bodenoberfläche angebracht. Zur Höhenverstellung ist dem Parallelogrammgestänge 24 ein Linearantrieb 25 in Form eines Hydraulik- oder Pneumatikzylinders derartig zugeordnet, dass der Höhenabstand zwischen dem Verteilgestänge 3 und einer Bodenoberfläche bzw. einem Pflanzenbestand variabel veränderbar ist. Der Träger 11 ist nicht um die Schwenkachse A verschwenkbar, dagegen ist das Verteilergestänge 3 um die Drehachse A verschwenkbar an der Aufhängung 11a am Träger 11 angeordnet.

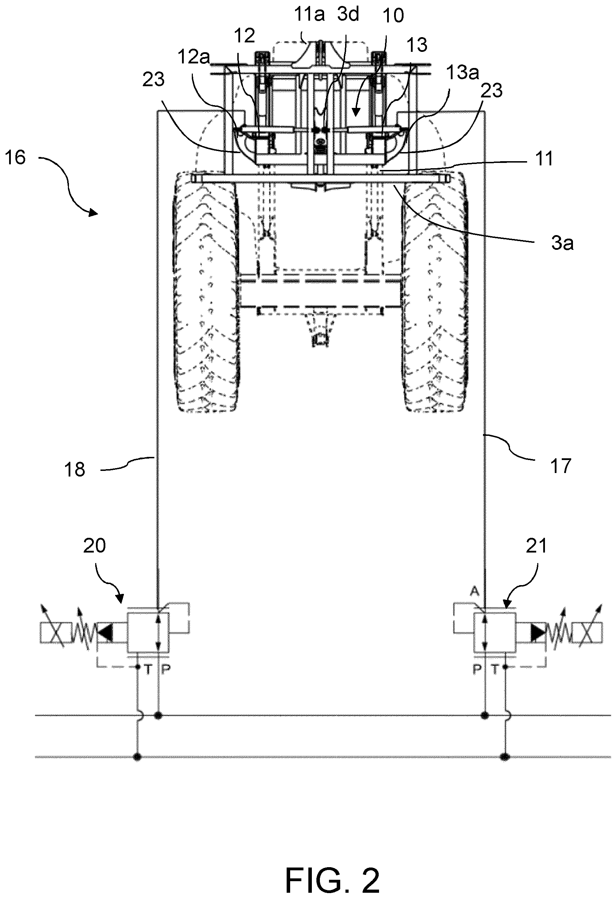

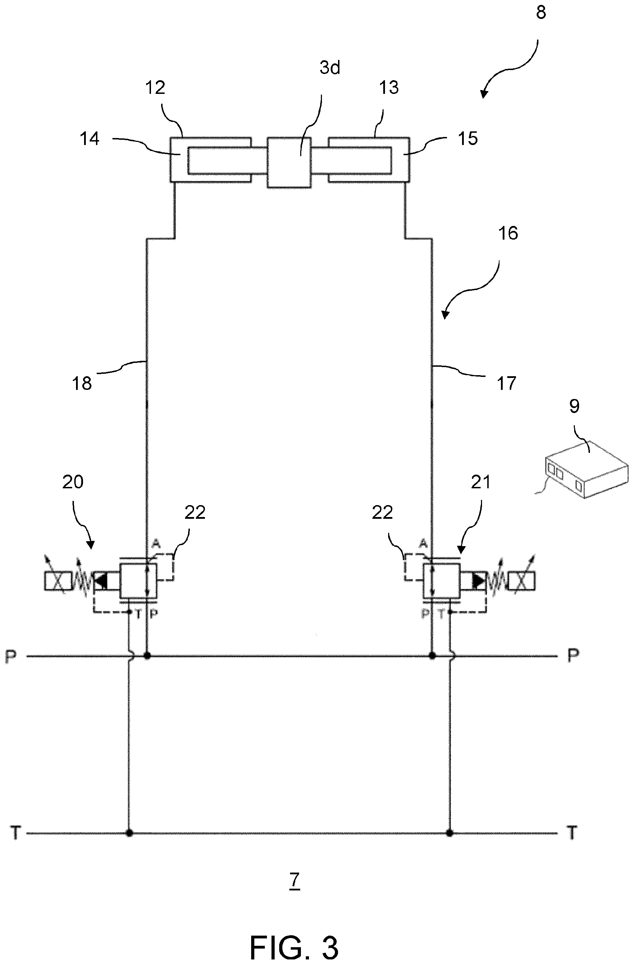

Die Verteilmaschine umfasst ferner eine Steuervorrichtung 7 zur Steuerung und/oder Regelung einer Drehlage des Verteilergestänges 3 um die Schwenkachse A. Die Steuervorrichtung 7 ist schematisch in Figur 3 dargestellt. Die Steuervorrichtung 7 umfasst eine druckmittelbetätigte Stelleinrichtung 8 mit zwei im Wesentlichen entgegengesetzt wirkenden Wirkbereichen 14, 15, mittels der eine Stellkraft erzeugbar ist, um das Verteilergestänge 3 gezielt um die Schwenkachse A zu bewegen. Dies ist in der Detailansicht der Figur 2 und ferner der Figur 3 erkennbar.

Die Stelleinrichtung 8 umfasst zur Ausbildung der beiden Wirkbereiche 14, 15 ein Stellorgan 10 in Form eines Linearaktuators, hier beispielhaft als zwei einfach wirkende, gegensinnig angeordnete Hydraulik - oder Pneumatikzylinder 12, 13 ausgeführt. Die Stellzylinder 12, 13 sind hier ferner als Plungerzylinder ausgeführt. Die Plungerzylinder sind an ihrem gehäuseseitigen Ende 12a, 13a an einem bügelartig abstehenden Abschnitt 23 des Trägers 11 befestigt. Die Anbindung der Stellzylinder 12, 13 am Verteilergestänge 3 erfolgt am vorderen Ende der Kolbenstange an einem Abschnitt 3d des Mittelteils 3a des Verteilergestänges 3.

Der Wirkbereich 14 (oder 15) des Stellzylinders 12 (oder 13) entspricht dem Bereich des Stellzylinders, in welchem die vom Druckmittel erzeugte Druckkraft in eine Bewegung der Kolbenstange des Stellzylinders 12, 13 umgesetzt wird.

Zur Erzeugung eines auf die Kolbenstange der Stellzylinder 12, 13 wirkenden Drucks sind die Wirkbereiche 14, 15 an einem Druckmittelkreislauf 16 angeschlossen. Hierzu ist an jedem Wirkbereich 14, 15 je eine Druckmittelleitungsstrecke 17, 18 angeschlossen, durch welche den Wirkbereichen 14, 15 ein Druckmittel, z. B. Luft oder Hydraulikflüssigkeit, zuführbar und aus diesen abführbar ist. In jeder Druckmittelleitungstrecke 17, 18 ist jeweils ein Druckregelventil 20, 21 zur Steuerung eines an dem jeweiligen Wirkbereich 14, 15 anliegenden Drucks angeordnet. Die beiden Druckregelventile 20, 21 sind als elektromagnetisch angesteuerte Proportional-Druckregelventile ausgeführt. Weitere Komponenten des Fluidkreislaufs, wie Pumpe und Fluidreservoir sind in an sich bekannter Weise ausgeführt und nicht dargestellt.

Die beiden Stellzylinder 12, 13 sind zueinander gegensinnig angeordnet, so dass zwei im Wesentlichen entgegengesetzt wirkende Wirkbereichen 14, 15 ausgebildet werden. Dies bedeutet, dass eine Druckkraft des Druckmittels in dem einen Wirkbereich 14 bzw. dem einen Stellzylinder 12 eine Verstellkraft auf das Verteilergestänge in der einen Richtung um die Schwenkachse erzeugt und eine Druckkraft von Druckmittel in dem anderen Wirkbereich 15 bzw. dem anderen Zylinder 13 eine Verstellkraft auf das Verteilergestänge in der entgegengesetzten Richtung um die Schwenkachse erzeugt. Der Druck und entsprechend die Stellkraft in dem Wirkbereich 14 wird vom Druckregelventil 20 eingestellt. Der Druck und entsprechend die Stellkraft in dem Wirkbereich 15 wird vom Druckregelventil 21 eingestellt. Durch die Regelung des an den Wirkbereichen 14, 15 bzw. den Stellzylindern 12, 13 anliegenden Druckmitteldrucks kann somit die Drehlage des Verteilergestänges 3 beeinflusst werden.

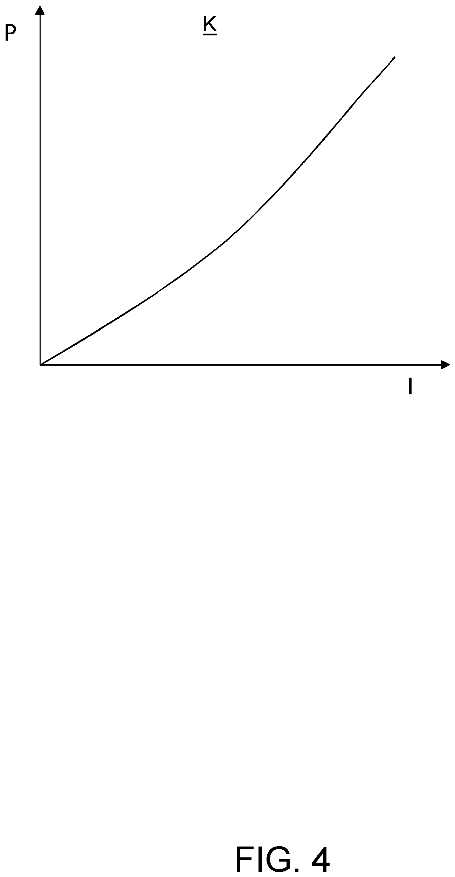

In der Steuereinrichtung 9 ist für jedes der Druckregelventile 20, 21 eine Kennlinie K hinterlegt, die einen Zusammenhang zwischen Sollwertvorgabe und elektrischem Ansteuerungssignal der Druckmittelregelventile 20, 21 festlegt, was in Figur 4 schematisch illustriert ist. Die Steuereinrichtung 9 ist ausgebildet, die Druckmittelregelventile 20, 21 jeweils anhand der Kennlinie K elektrisch gesteuert auf die Sollwertvorgabe einzustellen.

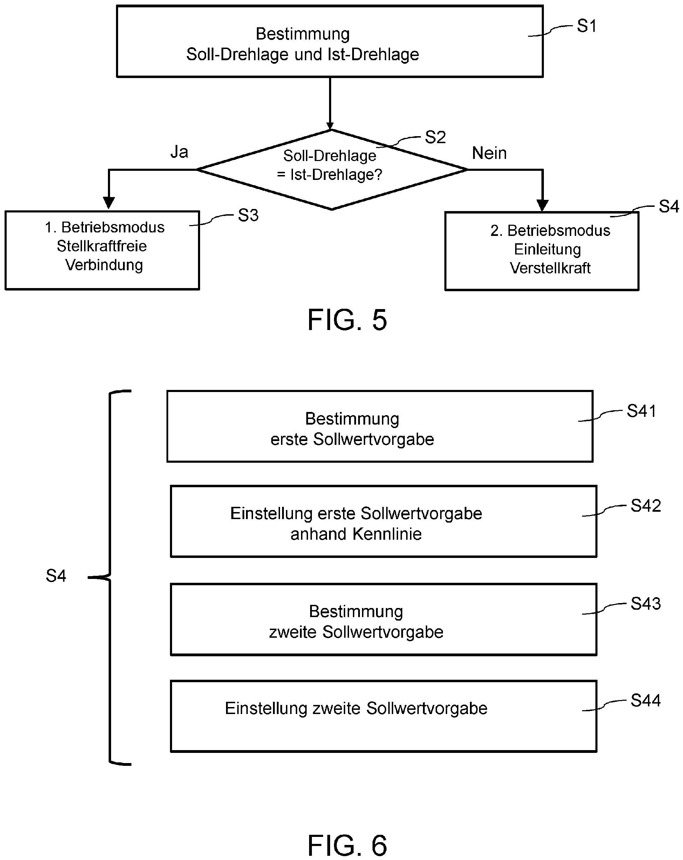

Die Funktionsweise der Steuerung oder Regelung der Drehlage des Verteilergestänges 3 ist beispielhaft anhand der Figuren 5 bis 7 illustriert. Figur 5 zeigt zunächst ein schematisches Blockdiagramm zur Illustration der Regelung der Drehlage des Verteilergestänges gemäß einem Ausführungsbeispiel. Im Arbeitsbetrieb der landwirtschaftlichen Verteilermaschine, d. h. wenn das Verteilergestänge sich im ausgeklappten Zustand und damit in der Arbeitsposition befindet, ist es erforderlich, dessen Drehlage auf eine gewünschte Solldrehlage einzustellen, um z. B. einen gleichmäßigen Abstand der Sprühdüsen zum Pflanzenbestand einzustellen. Hierzu ist die Steuereinrichtung 9 programmtechnisch eingerichtet, fortlaufend zu überwachen, ob die aktuelle Drehlage des Verteilergestänges 3 der gewünschten Solldrehlage entspricht. Hierzu werden zunächst die Solldrehlage und die momentane Drehlage des Verteilergestänges 3 bestimmt (Schritt S1 in Figur 5).

Die Solldrehlage kann beispielsweise anhand der Messwerte der Ultraschallsensoren 26 ermittelt werden, die den Abstand des Verteilergestänges an den Messpunkten der Ultraschallsensoren 26 zum Boden bzw. zum Pflanzenbestand ermitteln. Die Solldrehlage kann auch anderweitig vorgegeben werden, z. B. durch eine Benutzereingabe. Die Steuereinrichtung 9 ermittelt ferner die momentane Drehlage des Verteilergestänges 3 anhand der Messwerte des Drehratensensors 5 und des Drehwinkelsensors 6. Hierzu wird durch zeitliche Integration einer mit dem Drehratensensor 5 erfassten Drehgeschwindigkeit eine Drehlage des Verteilergestänges berechnet und diese berechnete Drehlage mit der erfassten Drehlage des Drehwinkelsensors 6 zur Bestimmung einer momentanen Drehlage des Gestänges anschließend fusioniert. Die Steuereinrichtung kann hierzu beispielsweise eine Kalman-Filterung ausführende Mittel und/oder Mittel zur Tiefpassfilterung der sensorisch erfassten Drehlage umfassen sowie Mittel zum Vergleich der tiefpassgefilterten sensorisch erfassten Drehlage unter ständigem Abgleich auf null mit der anhand einer Drehgeschwindigkeit berechneten Drehlage umfassen, um die Winkeldrift zu kompensieren. Beispielhaft wird auf die Fusionierung in EP 3 007 553 B1 für eine mögliche Umsetzung verwiesen. Andere bekannte Techniken zur Sensorfusion sind ebenfalls möglich, um die durch zeitliche Integration berechnete Drehlage mit der gemessenen Drehlage zu fusionieren und hieraus eine möglichst exakte Drehlage des Verteilergestänges 3 zu bestimmen.

In Schritt S2 wird überwacht, ob die bestimmte momentane Drehlage des Verteilergestänges 3 der Solldrehlage entspricht. Dies ist der Fall, wenn die momentane Drehlage nicht mehr als ein vorgegebener Schwellenwert von der Solldrehlage abweicht. Falls die bestimmte momentane Drehlage des Verteilergestänges 3 der Solldrehlage entspricht, wird von der Steuereinrichtung 9 in Schritt S3 ein Betriebsmodus (erster Betriebsmodus) durchgeführt, in dem das Verteilergestänge weitestgehend von Drehmomenten um die Schwenkachse A resultierend aus Fahrzeugbewegungen um die Fahrzeuglängsachse entkoppelt ist. Hierzu wird ein aktuelles elektrisches Ansteuerungssignal der Druckmittelregelventile 20, 21 konstant gehalten.

In diesem Betriebsmodus wird mittels der Druckregelventile 20, 21 eine quasi stellkraftfreie Verbindung zwischen Verteilergestänge und Trägerfahrzeug hergestellt, derart, dass beispielsweise durch Wankbewegungen des Trägerfahrzeugs oder durch Gestängebewegungen verursachte Druckspitzen oder Kräfteschwankungen an den Wirkbereichen durch die Druckmittelregelventile selbstständig ausgeregelt werden, indem der oder die aktuell über die aktuelle Bestromung der Druckregelventile 20, 21 vorgegebene Druck oder Kraft an den Wirkbereichen 14, 15 konstant gehalten wird. Das anhand der Kennlinie K ermittelte konstante elektrische Ansteuerungssignal der Druckmittelregelventile 20, 21 stellt sicher, dass in das Verteilergestänge eingeleitete Störmomente, z. B. resultierend aus Wankbewegungen des Trägerfahrzeugs, sofort ausgeglichen, z. B. ausregegelt werden, so dass diese erst gar nicht zu einer unerwünschten Veränderung der Drehlage und unerwünschten Verstellung des Verteilergestänges führen.

Die Druckregelventile 20, 21 haben einen Druckbereich von 0 Bar bis 120 Bar. Damit z. B. keine unerwünschte Stellkraft in das Verteilergestänge 3 eingeleitet wird, werden beispielsweise beide Wirkbereiche 14, 15 der Stelleinrichtung mit einem konstanten Druck, lediglich beispielhaft z. B. 30 Bar, als Sollwertvorgabe beaufschlagt. Anders ausgedrückt, werden im ersten Betriebsmodus beide Wirkbereiche 14, 15 bzw. die Zylinderkammern der Stellzylinder 12, 13 mit z. B. 30 Bar beaufschlagt.

Kommt es nun beispielsweise durch Gestängebewegungen zu kurzzeitigen "Druckspitzen" an den Wirkbereichen 14, 15, werden diese mittels der Druckregelventile 20, 21 entsprechend sofort ausgeregelt, so dass derartige kurzfristige Druckspritzen gar nicht erst zu einer unerwünschten Verstellung des Verteilergestänges 3 führen können. Anders ausgedrückt bedeutet dies, dass die Druckregelventile 20, 21 ausgebildet sind, einen auf Basis der Kennlinie K von der Steuereinrichtung 9 über die entsprechende Bestromung eingestellten Druck selbstständig konstant zu halten. Dargestellt wird dies durch die mit dem Bezugszeichen 22 gekennzeichnete Leitungsverbindung am Druckregelventil 20, 21. Zusätzliche Drucksensoren sind demnach nicht notwendig. Die Kräfte halten sich somit selbstständig in Waage. Auf das Verteilergestänge 3 einwirkende Störmomente, z. B. resultierend aus Wankbewegungen des Trägerfahrzeugs 2, können somit auf effiziente Weise ausregelt werden, bevor diese als unerwünschte Stellkräfte zu einer Verstellung der Drehlage des Verteilergestänges 3 führen.

Falls die bestimmte momentane Drehlage des Verteilergestänges 3 nicht der Solldrehlage entspricht, d. h. um mehr als ein Schwellenwert von dieser abweicht, wird von der Steuereinrichtung 9 in Schritt S4 ein Betriebsmodus (zweiter Betriebsmodus) durchgeführt, in welchem eine definierte Verstellkraft in das Verteilergestänge 3 eingeleitet wird, um das Verteilergestänge wieder in die Solldrehlage zu verdrehen.

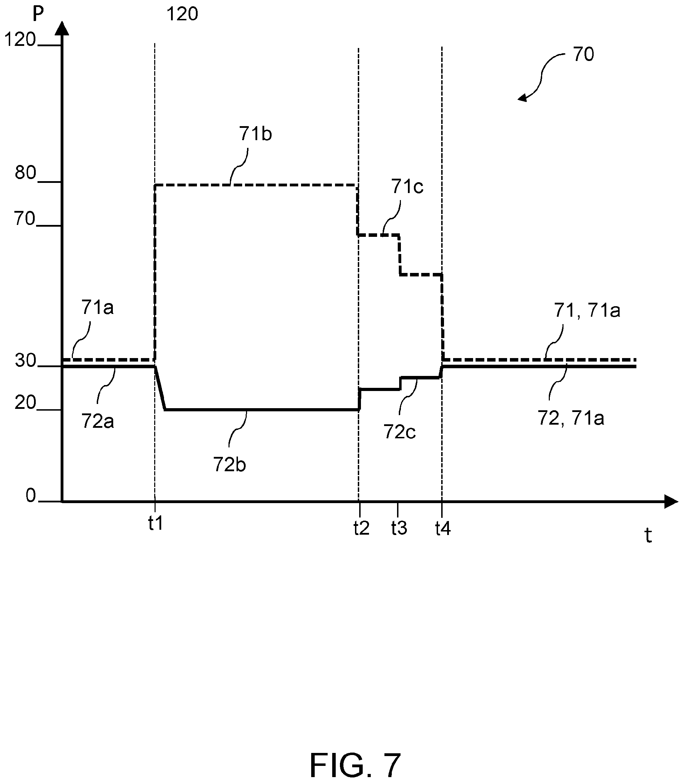

Eine Ausführungsform des zweiten Betriebsmodus ist in den Figuren 6 und 7 dargestellt. In Figur 7 zeigt die gestrichelte Linie 71 den zeitlichen Verlauf der Sollwertvorgabe des Wirkbereichs 14 und die durchgezogene Linie 72 den zeitlichen Verlauf der Sollwertvorgabe des Wirkbereichs 15. Bis zum Zeitpunkt t1 hat die Sollwertvorgabe an beiden Wirkbereichen den Wert 30 Bar (Abschnitte 71a und 72a), so dass das Verteilergestänge in der aktuelle Drehlage gehalten wird.

Kommt es nun im Zeitpunkt t1 zu einer Auslenkung des Verteilergestänges, wird zunächst anhand der Abweichung der momentanen Drehlage von der Solldrehlage eine neue Sollwertvorgabe (Schritt S41) für jeden Wirkbereich 14, 15 eines an den Wirkbereichen 14, 15 wirkenden Drucks des Druckmittels bestimmt. Anhand der Abweichung der momentanen Drehlage von der Solldrehlage und der bekannten Massenträgheit des Verteilergestänges 3 bestimmt die Steuereinrichtung 9, welches Drehmoment in das Verteilergestänge über die Stelleinrichtung 8 eingeleitet werden muss, um die Zielposition, d. h. die Solldrehlage, zu erreichen. Anders ausgedrückt, ist die Steuereinrichtung 9 ausgebildet, eine neue Sollwertvorgabe zu bestimmen, d. h. welche Verstellkraft (Zylinderkraft) benötigt wird bzw. welcher Druck an den Stellzylindern 12, 13 benötigt wird. Diese Sollwertvorgabe, d. h. dieser Druck, wird nun anhand der Kennlinie K am Druckregelventil erzeugt (Schritt S42). Diese Sollwertvorgabe ist in Figur 6 als erste Sollwertvorgabe bezeichnet. Die Kennlinie K gibt für den bestimmten Wert der Sollwertvorgabe die Bestromung der Druckregelventile 20, 21 vor.

Wiederum lediglich beispielhaft kann die Abweichung der momentanen Drehlage von der Solldrehlage ergeben, dass ausgehend von 30 Bar an beiden Wirkbereichen 14, 15 nun am Wirkbereich 14 ein Druck von 80 Bar und am Wirkbereich 15 ein Druck von 20 Bar erforderlich ist, um eine entsprechende Verstellkraft zu erzeugen, die das Verteilergestänge in die Sollposition verdreht. Aus der Kennlinie K ergeben sich dann für die neuen Sollwertvorgaben von 20 Bar und 80 Bar die entsprechenden Bestromungswerte für die Druckregelventile 20, 21. Entsprechend werden die Druckregelventile 20, 21 von der Steuereinrichtung 9 elektrisch angesteuert, so dass diese über ihre Druckregelung eigenständig die neuen Sollwertvorgaben an den Wirkbereichen 14, 15 einstellen.

Eine Besonderheit der vorliegenden Ausführungsform liegt jedoch darin, dass diese Druckdifferenz 80 Bar - 20 Bar = 60 Bar jedoch nicht so lange konstant gehalten bis beispielsweise die Sollposition erreicht ist und dann wieder auf beispielsweise 30 Bar zu 30 Bar geregelt wird. Stattdessen wird sich diesen Werten (30 Bar), die zum Halten des Verteilergestänges 3 in der Sollposition erforderlich sind, schrittweise angenähert, in dem weitere (zweite) Sollwertvorgaben in Schritt S43 bestimmt und anhand der Kennlinie K eingestellt werden (Schritt S44).

Dies ist in Figur 7 durch den stufenartigen Verlauf der Sollwertvorgaben 71, 72 im Bereich zwischen t2 und t4 illustriert. Kurz vor Erreichung der Solldrehlage reduziert die Steuereinrichtung 9 die Sollwertvorgabe schrittweise stufenartig. Vorliegend wird im Zeitpunkt t2 die Sollwertvorgabe 71 des Wirkbereichs 14 auf 70 Bar reduziert und die Sollwertvorgabe 72 des Wirkbereichs 15 auf 25 Bar erhöht. Im Zeitpunkt t3 wird die Sollwertvorgabe 71 des Wirkbereichs 14 weiter auf 60 Bar reduziert und die Sollwertvorgabe 72 des Wirkbereichs 15 weiter auf 28 Bar erhöht. Im Zeitpunkt t4 mit Erreichen der Solldrehlage wird dann an beiden Wirkbereichen 14, 15 wieder eine Sollwertvorgabe (dritte Sollwertvorgabe) von 30 Bar vorgegeben, um das Verteilergestänge in der erreichten Solldrehlage zu halten.

Wie diese Differenzen der Sollwertvorgaben bzw. der stufenartige Verlauf definiert werden, kann auch abhängig von der jeweiligen Drehlage sein. Beispielsweise kann optional die Anzahl der zweiten Sollwertvorgaben und/oder deren Abweichung von der ersten und dritten Sollwertvorgabe, in Abhängigkeit von der Abweichung der bestimmten Drehlage von der Solldrehlage des Verteilergestänges 3 festgelegt werden.

Die in Figur 7 gezeigte Annäherung der dritten Sollwertvorgabe mittels der zweiten Sollwertvorgabe, um den stufenartigen Verlauf zu realisieren, bietet den besonderen Vorzug, dass das Verteilergestänge vor Erreichen der Solldrehlage aktiv abgebremst bzw. gedämpft wird, so dass ein schnelles Einstellen der Solldrehlage, möglichst ohne oder mit wenig Überschwingen ermöglicht wird.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Landwirtschaftliche Verteilmaschine, z. B. gezogene Feldspritze
- 2: Trägerfahrzeug
- 3: Verteilergestänge
- 3a: Mittelteil
- 3b, 3c: Ausleger
- 3d: Befestigungsabschnitt am Mittelteil
- 4: Sensoreinrichtung
- 5: Drehratensensor
- 6: Drehlagensensor
- 7: Steuervorrichtung
- 8: Druckmittelbetätigte Stelleinrichtung
- 9: Steuereinrichtung
- 10: Stellorgan
- 11: Träger
- 11a: Aufhängung
- 12: Stellzylinder, z. B. einfachwirkender Plungerzylinder
- 12a: Befestigungsstelle
- 13: Stellzylinder, z. B. einfachwirkender Plungerzylinder
- 13a: Befestigungsstelle
- 14: Erster Wirkbereich
- 15: Zweiter Wirkbereich
- 16: Druckmittelkreislauf
- 17: Druckmittelleitungsstrecke
- 18: Druckmittelleitungsstrecke
- 19: Ausbringmittel
- 20: Druckregelventil
- 21: Druckregelventil
- 22: Regelleitung
- 23: Trägerabschnitt
- 24: Höhenverstellbares Parallelogrammgestänge
- 25: Hubzylinder
- 26: Ultraschallsensoren
- 70: Sollwertvorgabe
- 71,71a-c: Sollwertvorgabe für ersten Wirkbereich
- 72, 72a-c: Sollwertvorgabe für zweiten Wirkbereich
- A: Schwenkachse
- K: Kennlinie

## Patentansprüche

1. Landwirtschaftliche Verteilmaschine (1), vorzugsweise eine Feldspritze oder ein pneumatischer Düngerstreuer, umfassend
ein Trägerfahrzeug (2);
ein Verteilergestänge (3) zum Ausbringen von Material, wie Düngemittel, Pflanzenschutzmittel oder Saatgut, das zumindest um eine in Fahrtrichtung verlaufende Schwenkachse (A) bewegbar am Trägerfahrzeug (2) mittelbar oder unmittelbar angeordnet ist;
eine Sensoreinrichtung (4) zur Bestimmung einer Drehlage des Verteilergestänges (3), die mindestens einen am Verteilergestänge angeordneten Sensor (5) zur Erfassung einer Drehlage oder einer Drehgeschwindigkeit des Verteilergestänges (3) umfasst; und
eine Steuervorrichtung (7) zur Steuerung und/oder Regelung einer Drehlage des Verteilergestänges (3) um die Schwenkachse (A), wobei die Steuervorrichtung (7) umfasst:
eine druckmittelbetätigte Stelleinrichtung (8) mit zwei im Wesentlichen entgegengesetzt wirkenden Wirkbereichen (14, 15), mittels der eine Stellkraft erzeugbar ist, um das Verteilergestänge (3) um die Schwenkachse (A) zu bewegen, wobei jedem Wirkbereich (14, 15) ein Druckmittelregelventil (20, 21) zugeordnet ist zur Steuerung eines an dem jeweiligen Wirkbereich (14, 15) anliegenden Drucks oder Volumenstroms, und
eine Steuereinrichtung (9), die ausgebildet ist, in Abhängigkeit von der bestimmten Drehlage des Verteilergestänges (3) eine Sollwertvorgabe (70) eines an den Wirkbereichen (14, 15) wirkenden Drucks oder einer an den Wirkbereichen (14, 15) wirkenden Stellkraft des Druckmittels zu bestimmen und die Druckmittelregelventile (20, 21) jeweils elektrisch gesteuert auf die Sollwertvorgabe einzustellen, wobei die Steuereinrichtung (9) ausgebildet ist, die Druckmittelregelventile (20, 21) jeweils anhand einer vorbestimmten Kennlinie (K) der Druckmittelregelventile (20,21) elektrisch gesteuert auf die Sollwertvorgabe einzustellen, wobei die Kennlinie (K) der Druckmittelregelventile (20, 21) einen Zusammenhang zwischen Sollwertvorgabe und elektrischem Ansteuerungssignal der Druckmittelregelventile (20, 21) festlegt,
**dadurch gekennzeichnet, dass** die Steuereinrichtung (9) ausgebildet ist,
a) die Sollwertvorgabe ohne einen sensorisch erfassten Druckwert oder Volumenstromwert des Druckmittels zu bestimmen; und/oder
b) einen Steuerstrom zur Ansteuerung der Druckmittelregelventile (20, 21) ausschließlich anhand der Kennlinie und der Drehlage der Sensoreinrichtung (4) oder einer hieraus berechneten Größe zu bestimmen.

2. Landwirtschaftliche Verteilmaschine nach einem der vorhergehenden Ansprüche, wobei die Steuereinrichtung (9) ausgebildet ist, falls die bestimmte Drehlage einer Solldrehlage des Verteilergestänges (3) entspricht und/oder nicht mehr als um einen Schwellenwert von der Solldrehlage abweicht,
a) ein der Sollwertvorgabe zugeordnetes elektrisches Ansteuerungssignal der Druckmittelregelventile (20, 21) konstant zu halten und vorzugsweise keine Stellkräfte in das Verteilergestänge (3) einzuleiten, und/oder
b) einen ersten Betriebsmodus durchzuführen, in dem das Verteilergestänge weitestgehend von Drehmomenten um die Schwenkachse (A) resultierend aus Fahrzeugbewegungen um die Fahrzeuglängsachse entkoppelt ist, wobei ein der Sollwertvorgabe entsprechendes elektrisches Ansteuerungssignal der Druckmittelregelventile (20, 21) konstant gehalten wird.

3. Landwirtschaftliche Verteilmaschine (1) nach einem der vorhergehenden Ansprüche, wobei die Steuereinrichtung (9) ausgebildet ist, bei einer Abweichung der bestimmten Drehlage von einer Solldrehlage des Verteilergestänges (3)
a) für jeden der Wirkbereiche (14, 15) zu bestimmen:
- eine erste Sollwertvorgabe (71b), die eine Bewegung des Verteilergestänges hin zur Solldrehlage bewirkt;
- eine dritte Sollwertvorgabe (71a), die ein Halten des Verteilergestänges (3) in der Solldrehlage bewirkt, und
- mindestens eine zweite Sollwertvorgabe (71c), deren Wert zwischen der ersten und der dritten Sollwertvorgabe liegt,
und
b) die Druckmittelregelventile (20, 21) jeweils elektrisch gesteuert zuerst auf die erste Sollwertvorgabe (71b), dann vor Erreichen der Solldrehlage auf die mindestens eine zweite Sollwertvorgabe (71c) und bei Erreichung der Sollwertvorgabe auf die dritte Sollwertvorgabe (71a) einzustellen.

4. Landwirtschaftliche Verteilmaschine (1) nach Anspruch 3, wobei mehrere zweite Sollwertvorgaben für jeden Wirkbereich bestimmt werden, vorzugsweise derart, dass die dritte Sollwertvorgabe ausgehend von der ersten Sollwertvorgabe mittels der zweiten Sollwertvorgaben treppenartig ansteigend oder absteigend eingestellt wird.

5. Landwirtschaftliche Verteilmaschine (1) nach den Ansprüchen 3 oder 4, wobei die Steuereinrichtung (9) ausgebildet ist, die mindestens eine zweite Sollwertvorgabe, vorzugsweise deren Anzahl und/oder Abweichung von der ersten und dritten Sollwertvorgabe, in Abhängigkeit von der Abweichung der bestimmten Drehlage von der Solldrehlage des Verteilergestänges (3) festzulegen.

6. Landwirtschaftliche Verteilmaschine (1) nach den Ansprüchen4 oder 5, wobei die Einstellung der Druckmittelregelventile auf die erste, zweite und dritte Sollwertvorgabe anhand der vorbestimmten Kennlinie, vorzugsweise ausschließlich anhand der vorbestimmten Kennlinie, erfolgt.

7. Landwirtschaftliche Verteilmaschine (1) nach einem der vorhergehenden Ansprüche,
a) wobei kein Druckmittelsensor, insbesondere kein Drucksensor und/oder kein Differenzdrucksensor, im Druckmittelkreis außerhalb der Druckmittelregelventile, insbesondere den Druckmittelleitungsstrecken der druckmittelbetätigten Stelleinrichtung angeordnet ist und/oder zur Ansteuerung der Druckmittelregelventile verwendet wird;
und/oder
b) wobei die druckmittelbetätigte Stelleinrichtung keinen Sensor aufweist, der eine Auslenkung eines Stellorgans der Stelleinrichtung oder eine auf das Stellorgan wirkende Kraft erfasst, wobei die Stelleinrichtung vorzugsweise hierzu keinen Wegsensor, keinen Dehnungssensor und keinen Kraftsensor aufweist.

8. Landwirtschaftliche Verteilmaschine nach einem der vorhergehenden Ansprüche, wobei die Druckmittelregelventile (20, 21)
a) als Druckregelventile (20, 21), vorzugsweise als elektromagnetisch angesteuerte Proportional-Druckregelventile ausgeführt sind; oder
b) als Volumenstrom-Regelventile, vorzugsweise elektromagnetisch angesteuerte Volumenstrom-Regelventile ausgeführt sind.

9. Landwirtschaftliche Verteilmaschine (1) nach einem der vorhergehenden Ansprüche, wobei die Stelleinrichtung (8) zur Ausbildung der zwei im Wesentlichen entgegengesetzt wirkenden Wirkbereiche (14, 15) einen doppeltwirkenden fluidischen Druckmittelzylinder oder zwei gegensinnig arbeitende einfachwirkende fluidische Druckmittelzylinder, vorzugsweise zwei Plungerzylinder (12, 13), umfasst.

10. Landwirtschaftliche Verteilmaschine (1) nach einem der vorhergehenden Ansprüche, wobei die Sensoreinrichtung (4) zur Bestimmung einer Drehlage des Verteilergestänges (3) umfasst:
a) einen am Verteilergestänge (3) angeordneten Drehratensensor (5), vorzugsweise ein Gyroskop; und/oder
b) einen Drehwinkelsensor (6) zur Erfassung einer Relativdrehung zwischen Trägerfahrzeug und Gestänge oder einer Drehlage des Gestänges zum Boden, vorzugsweise einen zwischen Trägerfahrzeug und Verteilergestänge angeordneten Drehwinkelsensor.

11. Landwirtschaftliche Verteilmaschine (1) nach einem der vorhergehenden Ansprüche,
a) wobei die Sensoreinrichtung (4) zur Bestimmung einer Drehlage des Verteilergestänges (3) umfasst: einen am Verteilergestänge (3) angeordneten Drehratensensor (5) und einen Drehwinkelsensor (6) zur Erfassung einer Relativdrehung zwischen Trägerfahrzeug und Gestänge oder einer Drehlage des Gestänges zum Boden, vorzugsweise einen zwischen Trägerfahrzeug und Verteilergestänge angeordneten Drehwinkelsensor, und
b) wobei die Steuereinrichtung (9) ausgebildet ist, zur Bestimmung der Drehlage des Verteilergestänges um die Schwenkachse durch zeitliche Integration einer mit dem Drehratensensor erfassten Drehgeschwindigkeit eine Drehlage des Verteilergestänges zu berechnen, und die berechnete Drehlage mit der erfassten Drehlage des Drehwinkelsensors zur Bestimmung einer momentanen Drehlage des Gestänges zu fusionieren.

12. Landwirtschaftliche Verteilmaschine (1) nach einem der vorhergehenden Ansprüche, wobei die Stelleinrichtung (8) ausgebildet ist, das Verteilergestänge (3) wahlweise in beide Drehrichtungen um die in Fahrtrichtung verlaufende Schwenkachse (A) mit einer Winkelgeschwindigkeit von mindestens 0,1 rad/s, weiter vorzugsweise mindestens 0,2 rad/s zu bewegen.

13. Landwirtschaftliche Verteilmaschine (1) nach einem der vorhergehenden Ansprüche, wobei
a) an jedem Wirkbereich (14, 15) je eine Druckmittelleitungsstrecke (17, 18) angeschlossen ist, durch welche den Wirkbereichen ein Druckmittel zuführbar und aus diesen abführbar ist, und in jeder Druckmittelleitungstrecke (17, 18) das Druckmittelregelventil (20, 21) zur Steuerung eines an dem jeweiligen Wirkbereich (14, 15) anliegenden Drucks oder Volumenstroms angeordnet ist; und/oder
b) den Druckmittelregelventilen (20, 21) jeweils kein Sperrventil zugeordnet ist.

## Claims

1. Agricultural distribution machine (1), preferably a field sprayer or a pneumatic fertiliser spreader, comprising
a carrier vehicle (2);
a distributor boom (3) for spreading material, such as fertiliser, crop protection agent or seed, which is arranged directly or indirectly on the carrier vehicle (2) so as to be movable at least about a swivel axis (A) extending in the direction of travel;
a sensor device (4) for determining a rotational position of the distributor boom (3), which comprises at least one sensor (5) arranged on the distributor boom for detecting a rotational position or a rotational speed of the distributor boom (3); and
a control device (7) for controlling and/or regulating a rotational position of the distributor boom (3) about the swivel axis (A), the control device (7) comprising:
a pressure medium-actuated actuating device (8) with two substantially oppositely acting operating areas (14, 15), by means of which an actuating force can be generated in order to move the distributor boom (3) about the pivot axis (A), wherein a pressure medium regulating valve (20, 21) is associated with each operating area (14, 15) for controlling a pressure or volume flow applied to the respective operating area (14, 15), and
a control device (9) which is configured to determine, as a function of the determined rotational position of the distributor boom (3), a setpoint value specification (70) of a pressure acting on the operating areas (14, 15) or of an actuating force of the pressure medium acting on the operating areas (14, 15) and to set the pressure medium regulating valves (20, 21) in each case in an electrically controlled manner to the setpoint value specification , wherein the control device (9) is configured to set the pressure medium regulating valves (20, 21) to the setpoint value specification in each case in an electrically controlled manner on the basis of a predetermined characteristic curve (K) of the pressure medium regulating valves (20, 21), the characteristic curve (K) of the pressure medium regulating valves (20, 21) establishing a relationship between the setpoint value specification and the electrical actuation signal of the pressure medium regulating valves (20, 21),
**characterized in that** the control device (9) is configured
a) to determine the setpoint value specification without a pressure value or volumetric flow value of the pressure medium which is sensed by sensors; and/or
b) to determine a control current for controlling the pressure medium regulating valves (20, 21) exclusively on the basis of the characteristic curve and the rotational position of the sensor device (4) or a variable calculated therefrom.

2. Agricultural distribution machine according to one of the preceding claims, wherein the control device (9) is configured, if the determined rotational position corresponds to a desired rotational position of the distributor boom (3) and/or does not deviate from the desired rotational position by more than a threshold value,
a) to keep constant an electrical control signal, which is associated with the desired setpoint value specification, of the pressure medium regulating valves (20, 21) and preferably no actuating forces are introduced into the distributor boom (3), and/or
b) a first operating mode is carried out in which the distributor boom is decoupled as far as possible from torques about the pivot axis (A) resulting from vehicle movements about the vehicle longitudinal axis, wherein an electrical control signal of the pressure medium regulating valves (20, 21) corresponding to the setpoint value specification is kept constant.

3. Agricultural distribution machine (1) according to one of the preceding claims, wherein the control device (9) is configured, in the event of a deviation of the determined rotational position from a desired rotational position of the distributor boom (3)
a) to determine for each of the operating areas (14, 15):
- a first setpoint value specification (71b) which causes the distributor boom to move towards the setpoint rotational position;
- a third setpoint value specification (71a) which causes the distributor boom (3) to be held in the setpoint rotational position, and
- at least one second setpoint value specification (71c) whose value lies between the first and the third setpoint value specification,
and
b) to set the pressure medium regulating valves (20, 21) electrically controlled first to the first setpoint value specification (71b), then before the setpoint rotational position is reached to the at least one second setpoint value specification (71c) and when the setpoint value specification is reached to the third setpoint value specification (71a).

4. Agricultural distribution machine (1) according to claim 3, wherein a plurality of second setpoint specifications are determined for each operating area, preferably in such a way that the third setpoint specification is set in a staircase-like ascending or descending manner starting from the first setpoint specification by means of the second setpoint specifications.

5. Agricultural distribution machine (1) according to claims 3 or 4, wherein the control device (9) is configured to determine the at least one second setpoint value, preferably the number thereof and/or deviation from the first and third setpoint value, as a function of the deviation of the determined rotational position from the setpoint rotational position of the distributor boom (3).

6. Agricultural distribution machine (1) according to claims 4 or 5, wherein the setting of the pressure medium regulating valves to the first, second and third setpoint specification is carried out on the basis of the predetermined characteristic curve, preferably exclusively on the basis of the predetermined characteristic curve.

7. Agricultural distribution machine (1) according to one of the preceding claims,
a) wherein no pressure medium sensor, preferably no pressure sensor and/or no differential pressure sensor, is arranged in the pressure medium circuit outside the pressure medium regulating valves, preferably the pressure medium line sections of the pressure medium-actuated actuating device and/or is used for actuating the pressure medium regulating valves;
and/or
b) wherein the pressure medium-actuated actuating device does not comprise a sensor which detects a deflection of an actuating element of the actuating device or a force acting on the actuating element, wherein the actuating device preferably does not comprise neither a displacement sensor, a strain sensor nor a force sensor for this purpose.

8. Agricultural distribution machine according to any of the preceding claims, wherein the pressure medium regulating valves (20, 21)
a) are configured as pressure regulating valves (20, 21), preferably as electromagnetically controlled proportional pressure regulating valves; or
b) are configured as volume flow regulating valves, preferably electromagnetically controlled volume flow regulating valves.

9. Agricultural distribution machine (1) according to one of the preceding claims, wherein the actuating device (8) comprises, for providing the two substantially oppositely acting operating areas (14,15), a double-acting fluidic pressure medium cylinder or two single-acting fluidic pressure medium cylinders, preferably two plunger cylinders (12, 13), operating in opposite directions.

10. Agricultural distribution machine (1) according to one of the preceding claims, wherein the sensor device (4) for determining a rotational position of the distributor boom (3) comprises:
a) rotation rate sensor (5), preferably a gyroscope, arranged on the distributor boom (3); and/or
(b) a rotation angle sensor (6) for detecting a relative rotation between carrier vehicle and distributor boom or a rotational position of the distributor boom with respect to the ground, preferably a rotation angle sensor arranged between carrier vehicle and distributor boom.

11. Agricultural distribution machine (1) according to any of the preceding claims,
a) wherein the sensor device (4) for determining a rotational position of the distributor boom (3) comprises: a rotation rate sensor (5) arranged on the distributor boom (3) and a rotation angle sensor (6) for detecting a relative rotation between the carrier vehicle and the boom or a rotational position of the boom with respect to the ground, preferably a rotation angle sensor arranged between the carrier vehicle and the distributor boom, and
b) wherein the control device (9) is configured, for determining the rotational position of the distributor boom about the pivot axis, to calculate a rotational position of the distributor boom by time integration of a rotational speed detected with the rotational speed sensor, and to merge by sensor fusion the calculated rotational position with the detected rotational position of the rotational angle sensor for determining an actual rotational position of the distributor boom.

12. Agricultural distribution machine (1) according to any of the preceding claims,
wherein the actuating device (8) is configured to selectively move the distributor boom (3) in both directions of rotation about the pivot axis (A) extending in the direction of travel at an angular velocity of at least 0.1 rad/s, further preferably at least 0.2 rad/s.

13. Agricultural distribution machine (1) according to one of the preceding claims, wherein
a) a pressure medium line section (17, 18) is connected to each operating area (14, 15), through which a pressure medium can be supplied to and discharged from the operating areas, and the pressure medium regulating valve (20, 21) for controlling a pressure or volume flow present at the respective operating area (14, 15) is arranged in each pressure medium line section (17, 18); and/or
b) no shut-off valve is assigned to the pressure medium regulating valves (20, 21) in each case.

## Revendications

1. Machine d'épandage agricole (1), de préférence un pulvérisateur agricole ou un distributeur d'engrais pneumatique, comprenant
un véhicule porteur (2) ;
une rampe de distribution (3) destinée à épandre du matériel, tel que de l'engrais, un produit phytosanitaire ou des semences, laquelle est disposée directement ou indirectement sur le véhicule porteur (2) de manière à pouvoir être déplacée autour d'un axe de pivotement (A) qui suit un tracé dans la direction de déplacement ;
un dispositif capteur (4) destiné à déterminer une position de rotation de la rampe de distribution (3), lequel comporte au moins un capteur (5) disposé sur la rampe de distribution et destiné à détecter une position de rotation ou une vitesse de rotation de la rampe de distribution (3) ; et
un dispositif de commande (7) destiné à commander et/ou à réguler une position de rotation de la rampe de distribution (3) autour de l'axe de pivotement (A), le dispositif de commande (9) comportant :
un dispositif de réglage (8) actionné par fluide sous pression, comprenant deux zones d'action (14, 15) agissant sensiblement en sens inverse, au moyen duquel peut être générée une force de réglage en vue de déplacer la rampe de distribution (3) autour de l'axe de pivotement (A), une vanne de régulation de fluide sous pression (20, 21) étant associée à chaque zone d'action (14, 15) pour commander une pression ou un débit volumique appliqué à la zone d'action (14, 15) respective, et
un dispositif de commande (9), qui est configuré pour, en fonction de la position de rotation détectée de la rampe de distribution (3), déterminer une valeur de consigne prédéfinie (20) d'une pression agissant au niveau des zones d'action (14, 15) ou d'une force de réglage du fluide sous pression agissant au niveau des zones d'action (14, 15) et régler les vannes de régulation de fluide sous pression (20, 21) à la valeur de consigne prédéfinie respectivement par commande électrique, le dispositif de commande (9) étant configuré pour régler les vannes de régulation de fluide sous pression (20, 21) à la valeur de consigne prédéfinie par commande électrique, respectivement à l'aide d'une courbe caractéristique (K) prédéterminée des vannes de régulation de fluide sous pression (20, 21), la courbe caractéristique (K) des vannes de régulation de fluide sous pression (20, 21) spécifiant une relation entre la valeur de consigne prédéfinie et le signal de commande électrique des vannes de régulation de fluide sous pression (20, 21),
**caractérisée en ce que** le dispositif de commande (9) est configuré pour
a) déterminer la valeur de consigne prédéfinie sans une valeur de pression ou une valeur de débit volumique du fluide sous pression détectées par capteur ; et/ou
b) déterminer un courant de commande destiné à commander les vannes de régulation de fluide sous pression (20, 21) exclusivement à l'aide de la courbe caractéristique et de la position de rotation du dispositif capteur (4) ou une grandeur calculée à partir de celle-ci.

2. Machine d'épandage agricole selon l'une des revendications précédentes, le dispositif de commande (9) étant configuré pour, dans le cas où la position de rotation déterminée correspond à une position de rotation de consigne de la rampe de distribution (3) et/ou ne diverge pas de la position de rotation de consigne de plus d'une valeur de seuil,
a) maintenir constant un signal de commande électrique des vannes de régulation de fluide sous pression (20, 21), associé à la valeur de consigne prédéfinie, et de préférence n'initier aucune force de réglage dans la rampe de distribution (3), et/ou
b) mettre en œuvre un premier mode de fonctionnement, dans lequel la rampe de distribution est en grande partie désaccouplée des couples autour de l'axe de pivotement (A) résultant des mouvements du véhicule autour de l'axe longitudinal du véhicule, un signal de commande électrique des vannes de régulation de fluide sous pression (20, 21), correspondant à la valeur de consigne prédéfinie, étant maintenu constant.

3. Machine d'épandage agricole (1) selon l'une des revendications précédentes, le dispositif de commande (9) étant configuré pour, dans le cas d'une divergence de la position de rotation déterminée par rapport à une position de rotation de consigne de la rampe de distribution (3),
a) déterminer, pour chacune des zones d'action (14, 15) :
- une première valeur de consigne prédéfinie (71b), qui provoque un mouvement de la rampe de distribution en direction de la position de rotation de consigne ;
- une troisième valeur de consigne prédéfinie (71a), qui provoque un arrêt de la rampe de distribution (3) dans la position de rotation de consigne, et
- au moins une deuxième valeur de consigne prédéfinie (71c) dont la valeur est comprise entre la première et la troisième valeur de consigne prédéfinie,
et
b) régler les vannes de régulation de fluide sous pression (20, 21), respectivement par commande électrique, tout d'abord à la première valeur de consigne prédéfinie (71b), ensuite à l'au moins une deuxième valeur de consigne prédéfinie (71c) avant d'atteindre la position de rotation de consigne puis, lorsque la position de rotation de consigne est atteinte, à la troisième valeur de consigne prédéfinie (71a).

4. Machine d'épandage agricole (1) selon la revendication 3, plusieurs deuxièmes valeurs de consigne prédéfinies étant déterminées pour chaque zone d'action, de préférence de telle sorte que la troisième valeur de consigne prédéfinie est réglée en escalier ascendant ou descendant à partir de la première valeur de consigne prédéfinie par l'intermédiaire de plusieurs deuxièmes valeurs de consigne prédéfinies.

5. Machine d'épandage agricole (1) selon l'une des revendications 3 ou 4, le dispositif de commande (9) étant de préférence configuré pour spécifier l'au moins une deuxième valeur de consigne prédéfinie, de préférence son nombre et/ou son écart par rapport à la première et à la troisième valeur de consigne prédéfinie, en fonction de l'écart entre la position de rotation déterminée et la position de rotation de consigne de la rampe de distribution (3).

6. Machine d'épandage agricole (1) selon l'une des revendications 4 ou 5, le réglage des vannes de régulation de fluide sous pression à la première, la deuxième ou la troisième valeur de consigne prédéfinie s'effectuant à l'aide de la courbe caractéristique prédéterminée, de préférence exclusivement à l'aide de la courbe caractéristique prédéterminée.

7. Machine d'épandage agricole (1) selon l'une des revendications précédentes,
a) aucun capteur de fluide sous pression, notamment aucun capteur de pression et/ou aucun capteur de pression différentielle, n'étant disposé dans le circuit de fluide sous pression en-dehors des vannes de régulation de fluide sous pression, notamment des tronçons de conduite de fluide sous pression du dispositif de réglage actionné par fluide sous pression et/ou n'étant utilisé pour la commande des vannes de régulation de fluide sous pression ;
et/ou
b) le dispositif de réglage actionné par fluide sous pression ne possédant aucun capteur qui détecte une déviation d'un organe de réglage du dispositif de commande ou une force agissant sur l'organe de réglage, le dispositif de réglage ne possédant à cet effet de préférence aucun capteur de course, aucun capteur de contrainte et aucun capteur de force.

8. Machine d'épandage agricole selon l'une des revendications précédentes, les vannes de régulation de fluide sous pression (20, 21)
a) étant réalisées sous la forme de vannes de régulation de pression (20, 21), de préférence sous la forme de vannes de régulation de pression proportionnelles à commande électromagnétique ; et
b) étant réalisées sous la forme de vannes de régulation de débit volumique, de préférence de vannes de régulation de débit volumique à commande électromagnétique.

9. Machine d'épandage agricole (1) selon l'une des revendications précédentes, le dispositif de réglage (8), en vue de former les deux zones d'action (14, 15) agissant sensiblement en sens inverse, comprenant un vérin à fluide sous pression fluidique à double action ou deux vérins à fluide sous pression fluidiques à simple action fonctionnant en sens inverse, de préférence deux vérins à plongeur (12, 13).

10. Machine d'épandage agricole (1) selon l'une des revendications précédentes, le dispositif capteur (4) destiné à déterminer une position de rotation de la rampe de distribution (3) comprenant :
a) un capteur de vitesse de rotation (5) disposé sur la rampe de distribution (3), de préférence un gyroscope ; et/ou
b) un capteur d'angle de rotation (6) destiné à détecter une rotation relative entre le véhicule porteur et la rampe ou une position de rotation de la rampe par rapport au sol, de préférence un capteur d'angle de rotation disposé entre le véhicule porteur et la rampe de distribution.

11. Machine d'épandage agricole (1) selon l'une des revendications précédentes,
a) le dispositif capteur (4) destiné à déterminer une position de rotation de la rampe de distribution (3) comprenant : un capteur de vitesse de rotation (5) disposé sur la rampe de distribution (3) et un capteur d'angle de rotation (6) destiné à détecter une rotation relative entre le véhicule porteur et la rampe ou une position de rotation de la rampe par rapport au sol, de préférence un capteur d'angle de rotation disposé entre le véhicule porteur et la rampe de distribution, et
b) le dispositif de commande (9) étant configuré pour, en vue de déterminer la position de rotation de la rampe de distribution autour de l'axe de pivotement, calculer une position de rotation de la rampe de distribution par intégration dans le temps d'une vitesse de rotation détectée avec le capteur de vitesse de rotation, et fusionner la position de rotation calculée avec la position de rotation détectée du capteur d'angle de rotation en vue de déterminer une position de rotation momentanée de la rampe.

12. Machine d'épandage agricole (1) selon l'une des revendications précédentes, le dispositif de réglage (8) étant configuré pour déplacer la rampe de distribution (3) au choix dans les deux directions de rotation autour de l'axe de pivotement (A) qui suit un tracé dans la direction de déplacement avec une vitesse angulaire d'au moins 0,1 rad/s, en outre de préférence d'au moins 0,2 rad/s.

13. Machine d'épandage agricole (1) selon l'une des revendications précédentes,
a) un tronçon de conduite de fluide sous pression (17, 18) étant respectivement raccordé à chaque zone d'action (14, 15), à travers lequel un fluide sous pression peut être acheminé aux zones d'action et peut être évacué ce celles-ci, et la vanne de régulation de fluide sous pression (20, 21) étant disposée dans chaque tronçon de conduite de fluide sous pression (17, 18) en vue de commande une pression ou un débit volumique appliqué à la zone d'action (14, 15) respective ; et/ou
b) aucune vanne d'arrêt n'étant respectivement associé aux vannes de régulation de fluide sous pression (20, 21) .
